# EUROPÄISCHE PATENTANMELDUNG

(11) **EP 0 678 686 A2**
(43) Veröffentlichungstag der Anmeldung: **25.10.1995**
(21) Anmeldenummer: 95102377.9
(22) Anmeldetag: 21.02.1995
(51) Int. Cl.: F16D 69/04, F16D 13/64

(54) **Kupplungsscheibe od. dgl. und Verfahren zu ihrer Herstellung**

(30) Priorität: 21.04.1994 DE 4414058
(71) Anmelder: Raybestos Industrie-Produkte GmbH, D-54497 Morbach (DE)
(72) Erfinder: Schulz, Norbert, D-51709 Marienheide (DE)
(74) Vertreter: Türk, Gille, Hrabal, Leifert

(57) **Zusammenfassung**

Es ist eine reine Kupplungsscheibe offenbart, die einen eine Nabe aufweisenden Scheibenkörper und eine über Druckfedern drehfest mit dem Scheibenkörper verbundenen Mitnehmerscheibe (1), die radial über den Scheibenkörper hinausragt, aufweist. Auf der Mitnehmerscheibe ist ein ringförmiger Reibbelag (2) mit Hilfe von Nieten, deren Köpfe im Reibbelag versenkt angeordnet sind, befestigt. Der Reibbelag (2) ist aus zwei Reibmaterial-Schichten (3,4) zusammengesetzt, wobei die eine - die untere - Reibmaterial-Schicht (3) auf die Mitnehmerscheibe (1) aufgenietet und die andere - die obere - Reibmaterial-Schicht (4) auf die untere Reibmaterial-Schicht flächendeckend aufgeklebt ist.

## Beschreibung

Die Erfindung betrifft eine Kupplungsscheibe mit den Merkmalen des Oberbegriffes des Patentanspruches 1. Außerdem betrifft die Erfindung ein Verfahren zum Herstellen von Kupplungsscheiben mit den Merkmalen des Oberbegriffes des Patentanspruches 6.

Wenn hier von Kupplungsscheiben gesprochen wird, so sind derartige Scheiben im weitesten Sinne zu verstehen, das heißt Scheiben, welche zum Herstellen eines Reibungsschlusses zwischen einem Antriebsmotor und einer angetriebenen Welle, wie sie beispielsweise bei Kraftfahrzeugen oder ähnlichen Antrieben Verwendung finden, dienen. Derartige Kupplungsscheiben werden beispielsweise auch innerhalb von schaltbaren Getrieben eingesetzt. Weitere Anwendungsmöglichkeiten sind aber nicht ausgeschlossen.

Bei Kupplungsscheiben besteht das Problem, daß die einseitig oder beidseitig auf einer Mitnehmerscheibe angeordneten Reibbeläge einen sogenannten Berstdruck aushalten müssen, das heißt eine ausreichende Festigkeit haben müssen, um auch bei fehlerhaftem Schalten, wenn beispielsweise beim Fahren mit hoher Geschwindigkeit aus einem höheren Gang irrtümlich in einen niedrigeren Gang zurückgeschaltet wird, die dabei auftretenden hohen Reib- und Fliehkräfte aufzufangen, damit der so kommende belastete Reibbelag nicht birst und nicht auseinanderbricht.

Um die notwendige Berstfestigkeit zu erzielen, ist es bekannt, Kupplungsscheiben mit bewehrten Reibbelägen zu versehen, das heißt mit Reibbelägen, welche nicht nur die gewünschten Reibeigenschaften aufweisen, sondern auch verhindern, daß unter extremen Belastungsfällen der an der Mitnehmerscheibe befestigte Reibbelag bersten und sich somit von der Mitnehmerscheibe lösen kann.

Bewehrte Reibbeläge sind Reibbeläge, die neben dem eigentlichen Reibmaterial auch noch Bewehrungsmaterialien wie beispielsweise strang- oder fadenförmige Einlagen enthalten, die in sinnvoller Weise im Material des Reibbelages verteilt sind und aus textilen Materialien sowie auch aus feinen Metall-Drähten bestehen können.

Es wurde gefunden, daß Reibbeläge für Kupplungsscheiben bei unsachgemäßer Behandlung unter der erhöhten Fliehkraft in dem Bereich bersten, der mittels Mieten an der Kupplungsscheibe bzw. an deren Mitnehmerscheibe befestigt ist, das heißt in dem an der Mitnehmerscheibe anliegenden Bereich.

Weiterhin wurde gefunden, daß sich in den Bereichen von Reibbelägen, die außerhalb der Anordnung der die Reibbeläge an einer Mitnehmerscheibe haltenden Miete liegen, selbst bei überhöhter Beanspruchung keine nachteiligen Folgen ergeben, auch wenn diese Bereiche der Reibbeläge unbewehrt sind.

Der Erfindung liegt die Aufgabe zugrunde, Kupplungsscheiben optimaler Verschleißfestigkeit in einfacher Weise herstellen zu können.

Diese Aufgabe wird erfindunggemäß mit einer Kupplungsscheibe der eingangs genannten Gattung gelöst, welches die Merkmale des Anspruches 1 aufweist. Vorteilhafte Ausgestaltungen dieser Erfindung sind Gegenstand der auf den Patentanspruch 1 zurückbezogenen Unteransprüche.

Außerdem wird die Aufgabe der Erfindung mit einem Verfahren gelöst, welches die Merkmale des Patentanspruches 6 aufweist. Vorteilhafte Ausgestaltungen dieses Verfahrens sind Gegenstand der auf den Patentanspruch 6 rückbezogenen Unteransprüche.

Erfindungsgemäß wird vorgeschlagen, jeden Reibbelag zweischichtig auszubilden, um unterschiedliche Eigenschaften, die für Kupplungsscheiben bzw. deren Reibbeläge notwendig sind, in so weit wie möglich unterschiedlichen Zonen oder Abschnitten der Reibbeläge zu erzielen. So ist der jeweils untere Teil jedes Reibbelages vorzugsweise bewehrt und somit dazu ausgelegt, die Berstkräfte aufzufangen, während der obere Teil des Reibbelages unbewehrt sein kann, um bevorzugt die gewünschten Reibeigenschaften zu gewährleisten. Dieser obere Teil des erfindungsgemäßen Reibbelages bildet die Verschleißschicht, während der untere Teil im wesentlichen eine Trag- oder Haltefunktion hat.

Da die untere Reibmaterial-Schicht bei der Bearbeitung, das heißt beim Schleifen auf Dickenmaß, auf der Mitnehmerscheibe verbleibt, ist die nach der Bearbeitung äußerst formstabil und bildet eine sehr gute Unterlage für die obere Reibmaterial-Schicht bzw. die austauschbare Verschleißschicht des Reibbelages.

Ein besonderer Vorteil der Erfindung liegt darin, daß vorhandene und bezüglich ihrer Reibbeläge abgenutzte Kupplungsscheiben und dergleichen einer erneuten Verwendung ohne die Notwendigkeit einer Entsorgung zugeführt werden können, weil es die Erfindung ermöglicht, bei vorhandenen Kupplungsscheiben die abgenutzten ringförmigen Reibbeläge mit einer neuen Reiboberfläche zu versehen, welche unbewehrt sein kann.

Der erfindungsgemäße Vorschlag abgenutzte Reibbeläge aufweisende Kupplungsscheiben durch Aufbringen einer neuen Reibschicht wieder-zuverwenden, ist preiswerter als der Austausch des gesamten bewehrten Reibbelages oder gar der Austausch der Kupplungsscheibe insgesamt mit den damit verbundenen Entsorgungsproblemen.

Hinzu kommt, daß durch den zweischichtigen Aufbau des Reibbelages die von einem Reibbelag geforderten unterschiedlichen Eigenschaften jeweils auf die Zonen oder Bereiche konzentriert werden können, wo sie wirklich benötigt werden. Noch ein weiterer Vorteil liegt darin, daß die Oberfläche des zweischichtigen Reibbelages ununterbrochen sein kann, das heißt nicht durch Löcher für die als Befestigungselemente vorgesehenen Niete unterbrochen wird. Die zur Verfügung stehende Reibfläche ist also größer als bei bekannten vergleichbaren Reibbelägen.

Auch werden sogenannte Taschen in der Oberfläche des Reibmaterials vermieden, in denen sich Abrieb, Schmutz oder auch Gleit- und Schmiermittel ansammeln kann.

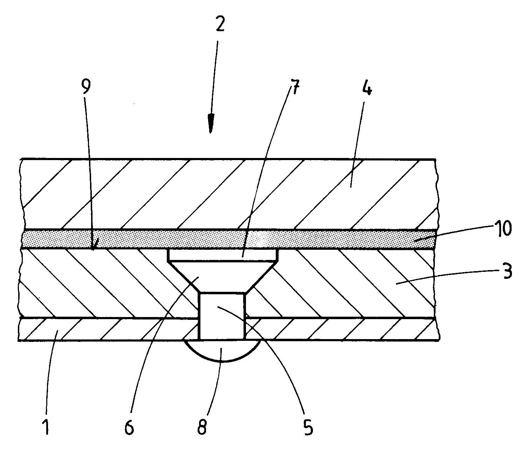

Die Erfindung wird weiterhin anhand der Zeichnung erläutert, welche in übertrieben großer und nicht maßstabgerechter Wiedergabe einen Teilschnitt durch den mit einem einseitig aufgebrachten Reibbelag versehenen Teil einer nicht näher dargestellten Kupplungsscheibe zeigt.

Auf einer Mitnehmerscheibe (1) einer nicht weiter dargestellten Kupplungsscheibe bekannter Ausführung ist einseitig ein Reibbelag (2) befestigt. Dieser Reibbelag (2) ist zweischichtig ausgebildet und besteht aus einer unteren, auf der Mitnehmerscheibe (1) aufliegenden, darauf gehaltenen Reibmaterial-Schicht (3) und einer zweiten bzw. oberen Reibmaterial-Schicht (4), die auf der unteren Reibmaterial-Schicht (3) befestigt ist.

Zur Befestigung der unteren Reibmaterial-Schicht (3) sind Miete (5) vorgesehen, deren kronischer Kopf (6) in einem Senkloch (7) der Reibmaterial-Schicht (3) versenkt angeordnet ist. Das andere Ende (8) jedes Niets (5) ist auf der entgegengesetzten Seite der Mitnehmerscheibe (1) erweitert bzw. breitgedrückt, um in üblicher Weise die Nietverbindung herzustellen.

Die untere Reibmaterial-Schicht (3) besteht auf bewehrtem Reibmaterial. Auf die Oberseite (9) der unteren Reibmaterial-Schicht (3) ist eine dünne Klebstoffschicht (10) aus thermisch aushartendem Klebstoff aufgetragen, die in der Zeichnung lediglich wegen besserer Anschaulichkeit übertrieben dick dargestellt ist. Mit Hilfe dieser Klebstoffschicht (10) ist die obere Reibmaterial-Schicht (4) nach dem Aushärten des Klebstoffes auf der unteren Reibmaterial-Schicht (3) befestigt, so daß beide Reibmaterial-Schichten (3, 4) des Reibbelages (2) praktisch eine Einheit bilden.

Die obere Reibmaterial-Schicht (4) ist die Verschleißschicht des Reibbelages (2) und kann aus unbewehrtem Reibmaterial bestehen.

Ist die obere Reibmaterial-Schicht (4) durch Benutzung des Reibbelages (2) abgetragen, kann nach Überschleifen auf die untere Reibmaterial-Schicht (3) eine neue obere Reibmaterial-Schicht aufgeklebt werden, so daß die Kupplungsscheibe immer wieder verwendet werden kann und dementsprechend nicht entsorgt werden muß.

## Patentansprüche

1. Kupplungsscheibe od. dgl., mit einem eine Nabe aufweisenden Scheibenkörper, einer über Druckfedern drehfest mit dem Scheibenkörper verbundenen Mitnehmerscheibe, die radial über den Scheibenkörper hinausragt, und mit wenigstens einem ringförmigen Reibbelag, der auf einer Seite außerhalb des Scheibenkörpers auf der Mitnehmerscheibe mit Hilfe von Nieten, deren Köpfe im Reibbelag versenkt angeordnet sind, befestigt ist,
**dadurch gekennzeichnet**,
daß jeder Reibbelag (2) aus zwei Reibmaterial-Schichten (3, 4) zusammengesetzt ist, wobei die eine - die untere - Reibmaterial-Schicht (3) auf die Mitnehmerscheibe (1) aufgenietet und die andere - die obere - Reibmaterial-Schicht (4) auf die untere Reibmaterial-Schicht flächendeckend aufgeklebt ist.

2. Kupplungsscheibe nach Anspruch 1- dadurch gekennzeichnet, daß die Oberfläche (9) der unteren Reibmaterial-Schicht (3) vor dem Aufkleben der oberen Reibmaterial-Schicht (4) auf Dickenmaß glattgeschliffen ist.

3. Kupplungsscheibe nach Anspruch 1 oder 2, dadurch gekennzeichnet, daß die untere Reibmaterial-Schicht (3) aus bewehrtem Reibmaterial besteht.

4. Kupplungsscheibe nach einem der Ansprüche 1 bis 3, dadurch gekennzeichnet, daß die obere Reibmaterial-Schicht (4) aus unbewehrtem Reibmaterial besteht.

5. Kupplungsscheibe nach einem der Ansprüche 1 bis 4, dadurch gekennzeichnet, daß die untere Reibmaterial-Schicht (3) ein oberflächlich abgenutzter und bereits benutzter bewehrter Reibbelag ist.

6. Verfahren zum Herstellen von Kupplungsscheiben od. dgl., die einen Scheibenkörper mit Nabe, eine über ein aus Druckfedern gebildetes Federkissen drehfest mit dem Scheibenkörper verbundene Mitnehmerscheibe, die radial über den Scheibenkörper hinausragt, und wenigstens auf einer Seite der Mitnehmerscheibe außerhalb des Scheibenkörpers einen mit Hilfe von versenkt angeordneten Mieten befestigten ringförmigen Reibbelag aufweisen, **dadurch gekennzeichnet**,
daß jeder Reibbelag nach dem Befestigen auf der Mitnehmerscheibe bis etwa auf die Höhe die Nietköpfe abgearbeitet und schließlich plangeschliffen, auf die plangeschliffene Oberfläche Klebstoff aufgetragen und danach ein flächendeckender zweiter ringörmiger Reibbelag auf den ersten Reibbelag aufgebracht und mit diesem dauerhaft verklebt wird.

7. Verfahren nach Anspruch 6, dadurch gekennzeichnet, daß ein wärmehärtender Klebstoff verwendet und der zweite Reibbelag unter Wärmeeinwirkung und Druck auf den ersten Reibbelag aufgeklebt wird.

8. Verfahren nach Anspruch 6 oder 7; dadurch gekennzeichnet, daß als Ausgangsmaterial für die Kupplungsscheibe eine mit wenigstens einem teilweise abgenutzten bewehrten Reibbelag versehene Kupplungsscheibe verwendet wird.
